Europäisches Patentamt

European Patent Office

Office européen des brevets

(19)

(11) **EP 1 170 663 A2**

(12) **EUROPEAN PATENT APPLICATION**

(43) Date of publication:
**09.01.2002 Bulletin 2002/02**

(51) Int Cl.7: **G06F 9/50**, G06F 9/46

(21) Application number: **01116112.2**

(22) Date of filing: **03.07.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventor: **Tanaka, Katsuyoshi**<br>**Yokohama-shi, Kanagawa (JP)** |
| (30) Priority: **05.07.2000 JP 2000203907** | (74) Representative:<br>**Grünecker, Kinkeldey, Stockmair &**<br>**Schwanhäusser Anwaltssozietät**<br>**Maximilianstrasse 58**<br>**80538 München (DE)** |
| (71) Applicant: **MATSUSHITA ELECTRIC INDUSTRIAL CO., LTD.**<br>**Kadoma-shi, Osaka 571-8501 (JP)** | |

(54) **Job distributed processing method and distributed processing system**

(57)    A job queuing server 3 is comprised of: a history saving function 104 for saving thereinto the respective job execution histories of the plurality of jobs which were executed in the past; a job history referring function 101 operated in such a manner that while a job selection method is executed by which a job is selected from the job execution history, and the job is resembled to the execution-subject job and was executed in the past, a resource amount required when the execution-subject job is executed inpredicted; a server resource managing function 102 operated in such a manner that while both a total resource amount saved by each of the plural computers and also used resource amounts used by the respective computers are managed in the format of a server resource management table, a list is made of such a computer that a summed resource amount does not exceed the total resource amount saved by the computer, and further, a load thereof becomes minimum, the summed resource amount being calculated between the predicted resource amount of the execution-subject job and the used resource amount obtained with reference to the server resource management table; and a job distributing function 103 for selecting such a computer whose load becomes minimum from the list and for distributing the entered job to the selected computer.

*FIG. 1*

EP 1 170 663 A2

# EP 1 170 663 A2

**Description**

BACKGROUND OF THE INVENTION

The present invention is related to a job distributed processing method and a distributed processing system, capable of distributing a job to execute the distributed job, while using a plurality of computers connected to each other via a network.

In highly advanced information technology society, various business produced from various enterprise activities are processed by computer systems. Furthermore, since the Internet has been explosively popularized in a later half of 1990's, various needs are made as to business processing operations handled by these computer systems, namely, complex business works, and large-scaled business works are processed in high speeds. Inparticular, an important aspect is to process various jobs within a short time period.

To accept these demands, there are many cases that distributed processing systems are constituted so as to process various jobs in enterprises. In these distributed processing systems, while a plurality of servers are connected to each other via networks, these servers are employed in the own section, and also other sections in enterprises.

While this type of distributed processing system is operated, there are two major problems. As to the first major problem, while executing a work unit in a server, which is called as a job, a process, or a task to be processed in this distributed processing system, in order to process jobs in high speeds by effectively utilizing each of server resources (both hardware and software), conditions of the respective server resources must be grasped and the jobs must be distributed to the respective servers in an optimum manner.

Conventionally, as job distributing methods executed in distributed processing systems, the following methods have been proposed: That is, (1) as disclosed in Japanese Laid-open Patent Application No. Hei-10-11406, when the job is initiated, the job is distributed based upon the resource consumption conditions by the respective servers. (2) Also, as disclosed in Japanese Laid-open Patent Application No. Hei-10-198643, while the amount of the server resource consumed by the job to be executed is previously predicted, the job is distributed to the server in such a manner that the total server resource amount used by the job does not exceed the total resource amount saved by the servers. (3) The job is distributed based upon predetermined policy.

The second major problem is given as follows. That is, since the respective servers which constitute this distributed processing system are very expensive, the servers owned by the respective sections of the enterprise are connected to each other via the network in order that these servers can be commonly used by the entire enterprise. In the case that the respective computers are effectively utilized by employing the above-explained job distributing method, the charge processing operations as to the respective sections must be carried out based upon the actual uses of the server resources. Conventionally, the following saving/totalizing method is known. That is, as to the use section, the user, and the use time of each of the server resources, the job execution history is saved and totalized.

Also, when the server resource becomes short, a serious influence may be given to the enterprise activity, a proper judgment is required in such a case that the sever resource is increased by analyzing the actual use of the server resource.

In accordance with the above-described prior art, as to the job distributing method performed in the distributed processing system corresponding to the first major problem, (1) when the job is initiated, the job distributing method is determined based upon the use conditions of the respective server resources. However, since the server resources are varied time to time while time has passed, even in such a case that the servers owned the sufficiently large resource amounts when the job was initiated, the following happening may occur. That is, while the job is executed, the server resource becomes short, and thus, the job under execution is accomplished in abnormal state.

(2) In the case that such a job is executed and a server resource amount used by this job over its lifetime (namely, time duration defined from job initiation up to job end) is already known, an optimum server can be selected based upon both the resource saved by the server and conditions of other jobs when the job is distributed. However, nowadays, various jobs must be processed in enterprise activities, for instance, one job may be completely processed within a short time period, and another job may be completely processed for several days. With respect to such a large-scaled job which requires several days for process operation, it is practically difficult to previously investigate a server resource amount in a lifetime of this large-scaled job. Therefore, this conventional job distributing method can be hardly used.

These job distributing methods own such a problem that the job is distributed based upon only a predetermined rule and also only the known fact, namely, the condition when the job is initiated, and the feature of the job is the known fact.

To solve this problem, while the conventional technique is employed as the base, a judgment made by a job request person is additionally employed, so that the job must be distributed under optimum condition. In this case, the above-described judgment made by the job request person implies as follows: That is, even when a presently requested process content of a job and process contents are different from each other, a resource amount required to execute

2

such a job can be judged by considering similarities from such a job whose processed data scale is identical to the above-explained processed data scale based upon a history of jobs which were executed in the past.

As previously explained, since the history of the resembling jobs which were executed in the past is designated when the job is requested, the job distribution is determined with reference to this processed content. As a result, jobs having any scales may be executed.

Also, in the charging process operation of the conventional distributed processing system corresponding to the second major problem, after the actual uses (use section, user, use time etc.) of the jobs which have been processed on the respective servers are collected to one place, these actual uses are conventionally totalized. This totalized data is utilized in the case that the charging process operation is carried out, and the server is newly increased.

However, in this conventional distributed processing system, although there are plural servers, the server capabilities and the server resource mounting amounts of which are different from each other, the actual uses are not totalized by considering such features as the respective server capabilities. This distributed processing system owns such a problem that while the actual uses of the respective computers are totalized, the totalized data are simply multiplied. To solve this problem, a totalizing process operation must be carried out based on a predetermined reference value in order to reflect the server capability on the charge data.

SUMMARY OF THE INVENTION

The present invention has been made to solve the above-explainedproblems, and therefore, has an object to provide a job distributed processing method and a distributed processing system, capable of realizing a job distributing method, while considering a past job execution history. Also, another object of the present invention is to provide a job distributing method and a distributing processing system, capable of realizing a charge processing method, while considering the respective server capabilities.

The present invention has been accomplished by paying an attention to the following problem of the conventional job distributing method. That is, the job is distributed based upon only a predetermined rule and also only the known fact, namely, the condition when the job is initiated, and the feature of the job is the known fact. In other words, to solve this problem, while the conventional technique is employed as the base, a judgment made by a job request person is additionally employed, so that the job must be distributed under optimum condition. In this case, the above-described judgment made by the job request person implies as follows: That is, even when a presently requested process content of a job and process contents are different from each other, a resource amount required to execute such a job can be judged by considering similarities from such a job whose processed data scale is identical to the above-explained processed data scale based upon a history of jobs which were executed in the past. As previously explained, since the history of the resembling jobs which were executed in the past is designated when the job is requested, the job distribution is determined with reference to this processed content. As a result, jobs having any scales may be executed.

To achieve the objects of the present invention, a job distributing method, according to first aspect of the present invention, is featured by that in a job distributed processing method in which a plurality of computers having the respective preselected resource amounts are connected via a network to each other, and an entered job is distributed to any of the plural computers so as to execute the entered job, the job distributed processing method is characterized in that: a job execution history as to a plurality of jobs which were executed in the past is saved in each of the computers; and while referring to the job execution history, a selection is made of such a computer that when an execution-subject job is executed, the execution-subject job does not exceed the resource amount saved by the computer, and the execution-subject job is distributed to the selected computer.

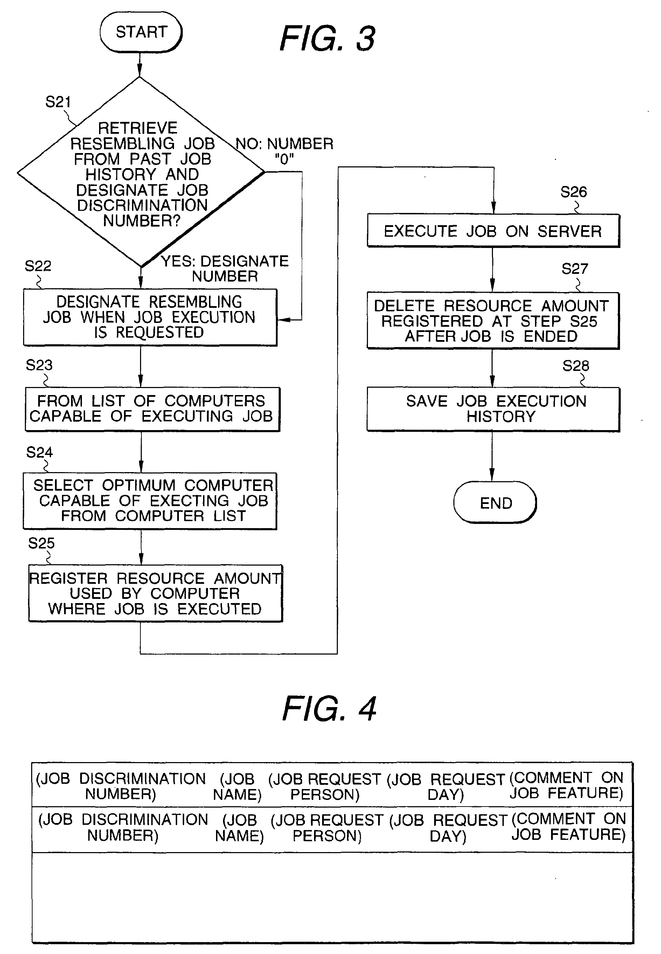

A job distributing processing method, according to second aspect of the invention, is featured by that while a job selection method is executed by which a job is selected from the job execution history, and the job is resembled to the execution-subject job and was executed in the past, a resource amount required when the execution-subject job is executed is predicted (Fig. 3: step S21) ; and while both a total resource amount saved by each of the plural computers and also used resource amounts used by the respective computers are managed in the format of a server resource management table, a selection is made of such a computer that a summed resource amount does not exceed the total resource amount saved by the computer, and further, a load thereof becomes minimum, the summed resource amount being calculated between the predicted resource amount of the execution-subject job and the used resource amount obtained with reference to the server resource management table; and the job is distributed to the selected computer (Fig. 3: step S23, S24).

A job distributing processing method, according to third aspect of the invention, is featured by that the job selecting method selects the job which was executed in the past and is resembled to the execution-subject job, while referring to the respective items of a comment in which a name of a job, a name of a job execution request person, a job execution request day, and a feature of a job are described.

A job distributing processing method, fourth aspect of the invention, is featured by that when there is no job which was executed in the past and is resembled to the execution-subject job, a selection is made of such a computer that a ratio of the used resource amount with respect to the total resource amount saved by the computer becomes minimum, and also a load thereof becomes minimum, and the entered job is distributed to the selected computer.

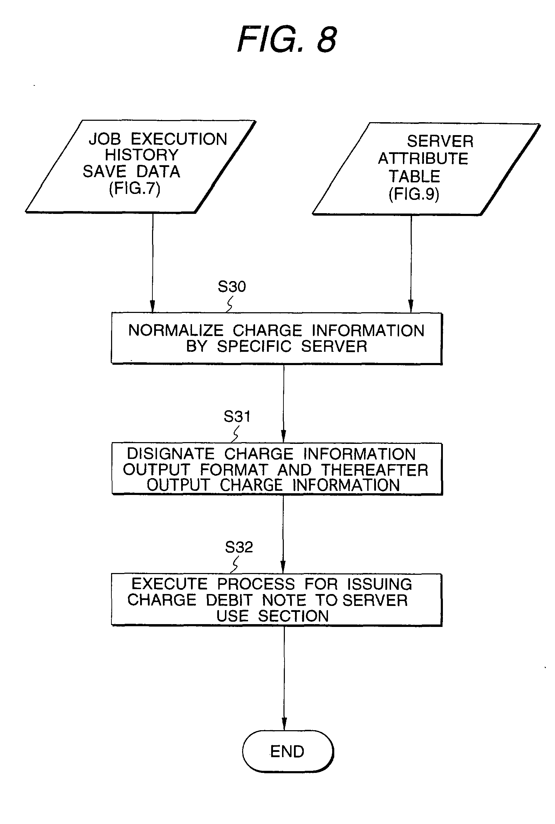

A job distributing processing method, according to fifth aspect of the invention, is featured by that capabilities of the respective computers are normalized (Fig. 8: step S30) while a capability of a specific computer is used as a reference; actual use data normalized from the job execution history is totalized/processed based upon the normalized computer capability (Fig. 8: step 31); and a charging process operation is carried out with respect to each of users of the respective computers based on the actual use data (Fig. 8: step S32).

A job distributing processing method, according to sixth aspect of the invention, is featured by that the charging process operation is carried out with respect to the user of each of the respective computers based upon a total expense required when each of the computers is conducted, a total expense required when each of the computers is operated, CPU time used by each of the jobs, and an actual memory amount used by each of the jobs.

A distributed processing system, according to seventh aspect of the invention, is featured by such a distributed processing system comprising a job queuing server which mutually connects a plurality of computers (client 2, file server 41, servers 51, 52, 53) having preselected resource amounts to each other via a network, and also distributes an entered job to any of the plural computers so as to execute the entered job by the job-distributed computer, in which the job queuing server (job queuing server 3) saves a job execution history as to a plurality of jobs which were executed in the past; and while referring to the job execution history, the job queuing server selects such a computer that when an execution-subject job is executed, the execution-subject job does not exceed the resource amount saved by the computer, and the job queuing server distributes the execution-subject job to the selected computer.

A distributed processing system, according to eighth aspect of the invention, is featured by that the job queuing server is comprised of: history saving means (job history saving function 104) for saving thereinto the respective job execution histories of the plurality of jobs which were executed in the past; history referring means (job history referring function 101) operated in such a manner that while a job selection method is executed by which a job is selected from the job execution history, and the job is resembled to the execution-subject job and was executed in the past, a resource amount required when the execution-subject job is executed in predicted; resource managing means (server resource managing function 102) operated in such a manner that while both a total resource amount saved by each of the plural computers and also used resource amounts used by the respective computers are managed in the format of a server resource management table, a list is made of such a computer that a summed resource amount does not exceed the total resource amount saved by the computer, and further, a load thereof becomes minimum, the summed resource amount being calculated between the predicted resource amount of the execution-subject job and the used resource amount obtained with reference to the server resource management table; and distributingmeans (job distributing function 103) for selecting such a computer whose load becomes minimum from the list and for distributing the entered job to the selected computer.

A distributed processing system, according to ninth aspect of the invention, is featured by that the job selecting method selects the job which was executed in the past and is resembled to the execution-subject job, while referring to the respective items of a comment in which a name of a job, a name of a job execution request person, a job execution request day, and a feature of a job are described.

A distributed processing system, according to tenth aspect of the invention, is featured by that when there is no job which was executed in the past and is resembled to the execution-subject job, the job distributing means selects such a computer that a ratio of the used resource amount with respect to the total resource amount saved by the computer becomes minimum, and also a load thereof becomes minimum, and also distributes the entered job to the selected computer.

A distributed processing system, according to eleventh aspect of the invention, is featured by that the distributed processing system is further comprised of: charge processing means (charge totalizing server 6) operated in such a manner that capabilities of the respective computers are normalized while a capability of a specific computer is used as a reference; actual use data normalized from the job execution history is totalized/processed based upon the normalized computer capability; and a charging process operation is carried out with respect to each of users of the respective computers based on the actual use data.

A distributed processing system, according to twelfth aspect of the invention, is featured by that the charge processing means further executes such a charging process operation with respect to the user of each of the respective computers based upon a total expense required when each of the computers is conducted, a total expense required when each of the computers is operated, CPU time used by each of the jobs, and an actual memory amount used by each of the jobs.

In accordance with the job distributed processing method and the distributed processing system of the present invention, while referring to either the saved job execution history or the execution history of the job which is resembled to the execution-subject job and was executed in the past, the resource amount required for the execution-subject job is predicted. As a result, such a computer can be selected in which the predicted resource amount added with the used resource amount do not exceed the resource amount saved in this computer when the execution-subject job is executed, and then, the execution-subject job is distributed to the selected computer. Furthermore, the job is distributed to such a computer which may be predicted as follows. That is, the summation between the server resource amount and the used resource amounts of the respective servers managed by the server resource management table does not exceed the total resource amount saved by the respective computers, and at the same time, the load becomes minimum when the execution-subject job is executed. The above-explained server resource amount contains the actual memory capacity and the virtual memory capacity, which will be consumed by the execution-subject job in future. As a result, these distributed processing method/system can avoid that the job is ended under abnormal state due to a shortage of the server resource, and also can shorten the processing time.

Also, in accordance with the job distributed processing method and the distributed processing system, the actual use data are totalized which are normalized from the job execution history, while the capability of the specific computer is used as the reference. As a result, fair expenses can be charged to the computer users, and at the same time, the totalized actual use data can be utilized as the judging base when the computer capabilities are increased.

BRIEF DESCRIPTION OF THE DRAWINGS

Fig. 1 is a diagram for indicating an arrangement of a distributed processing system according to embodiment modes 1 and 2 of the present invention;
Fig. 2 is a block diagram for showing a function of a job queuing server indicated in Fig. 1;
Fig. 3 is a flow chart for describing a flow operation of a job execution according to the embodiment mode 1;
Fig. 4 is a diagram for representing information of a job execution history;
Fig. 5 is a diagram for showing information used to transfer a job from a client to the job queuing server;
Fig. 6 is a diagram for showing a server resource management table;
Fig. 7 is a diagram for indicating a data format used to save a job execution history;
Fig. 8 is a flow chart for describing a flow operation executed until charge totalizing information according to the embodiment mode 2 of the present invention;
Fig. 9 is a diagram for indicating attribute information of a job execution server used in a charge totalizing process operation;
Fig. 10 is a diagram for showing a server-depending CPU actual use time report outputted by the charge totalizing process operation;
Fig. 11 is a diagram for indicating a section-depending server actual use time report outputted by the charge totalizing process operation; and
Fig. 12 is a diagram for showing an expense charging report outputted by the charge totalizing process operation.

DETAILED DESCRIPTION OF THE PREFERRED EMBODIMENTS

Referring now to drawing, an embodiment mode of the present invention will be explained.

(Embodiment Mode 1)

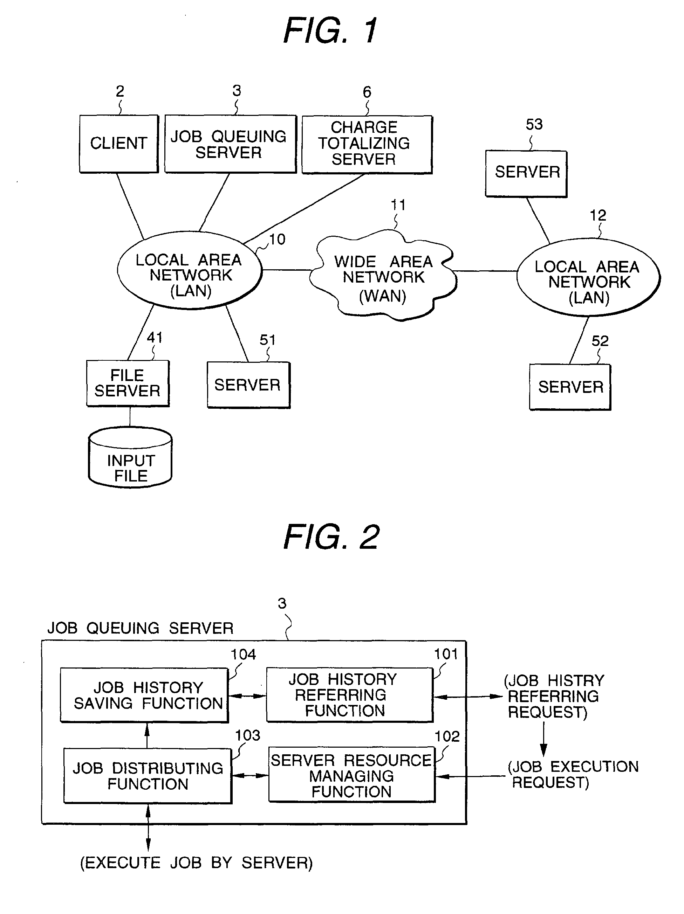

Fig. 1 is a diagram for indicating an arrangement of a distributed processing system according to an embodiment mode 1 of the present invention. In Fig. 1, a client 2 corresponds to a computer used to enter a job, a job queuing server 3 corresponds to a computer for seeking servers which can execute a job under optimum condition and for distributing the job to these servers, and a file server 41 corresponds to such a computer for storing thereinto both an input file and an application program, which are used in the job. Also, servers 51, 52, and 53 correspond to computers for executing the job, a charge totalizing server 6 corresponds to a computer for executing a charging process operation based upon a job execution history, and these computers 51 to 53 are connected to each other via networks 10, 11, and 12. The servers 3, 41, 51, 52, 53, 6, and the client 2 correspond to a computer containing a personal computer and a workstation. A job file, an input file, and an application file are stored into a storage apparatus connected to the server 41.

Fig. 2 is a schematic block diagram for indicating a function of the job queuing server 3. The job queuing server 3 is provided with a job history referring function 101 for referring to a past job execution history by a user; a server resource managing function 102; a job distributing function 103; and a job history saving function 104. The server resource managing function 102 is to form a list of servers which are capable of executing a job, while referring to resembling job execution history information which is designated when the user requests the execution of the job. The job distributing function 103 is to select an optimum server from the formed server list, and then to distribute the job to this server. The job history saving function 104 is to save such a job execution history while the job is executed on the server.

As to the distributed processing system with employment of the above-explained arrangement, operations of this distributed processing system will now be explained with reference to a flow chart of Fig. 3. First, when a user of the client 2 wants to execute a job, while utilizing the job execution history referring function saved by the job queuing server 3, the user selects a job discrimination number of a job which is resembled to an execution-subject job (a job to be executed) and was executed in the past based upon a job execution history (see Fig. 4). Also, in such a case that there is no resembling job, the user selects numeral of "0" as the job discrimination number (step 321).

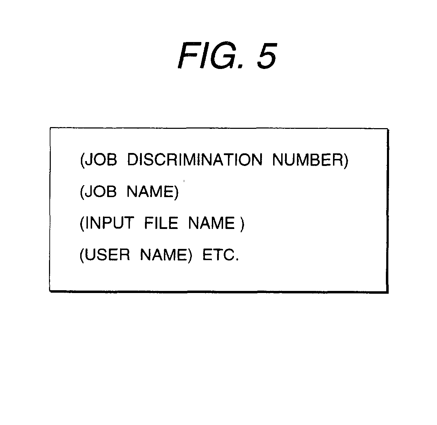

Fig . 4 indicates a display format of a job execution history, in which the user specifies such a job resembled to the execution-subject job by way of a job discrimination number with reference to a job name; a job request person; a job request day; and a comment for describing a feature of a job, which are described in the above-explained job execution history. Next, in order to request to execute the job, the user transmits information related to the job (for example, job name, input file name, user name etc.) to the job queuing server 3 in such a format to which the job discrimination number is applied (see Fig. 5) at a step S22.

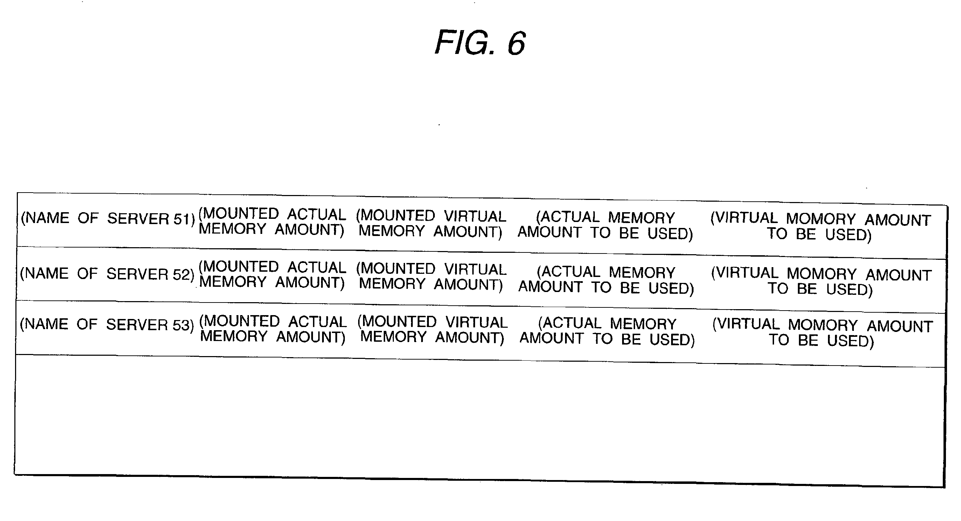

Next, the job queuing server 3 forms a list of such servers capable of executing this execution-subject job from a server resource management table (refer to Fig. 6) of the servers 51, 52, and 53. Fig. 6 indicates a display format of the server resource management table. This server resource management table contains information related to a server name; a mounted actual memory capacity "Mf", a mounted virtual memory capacity "My"; an actual memory capacity "Rf" to be used; and a virtual memory capacity "Rv" to be used. The servers 51, 52, and 53 may form a list of such servers by using the information of the server resource management table. In the servers of this list, both a use ratio Rf/Mf and another use ratio Rv/Mv of the server resources are low, and furthermore, such a value obtained by adding a predicted resource use amount of this execution-subject job to presently used resource amounts Rf and Rv does not exceed the mounted resource amounts Mf and Mv (step S23).

It should be noted that numeral of "0" is designated as the discrimination number of the resembling job, the servers 51, 52, 53 form such a list of servers in which the above-described use ratio of the server resource is low. For instance, while a preselected number of servers are selected in such a sequential order that the use ratios of the server resources are low, a list of these selected servers is formed.

Next, the job is distributed to such a computer that a load thereof becomes minimum when the execution-subject job is executed from the above-described server list (step S24). A load of a server may be calculated in accordance with, for example, the below-mentioned formula:

$$SPEC = (CPU \text{ use rate for 1 minute} + CPU \text{ use rate for 15 minutes}) / \text{computer capability};$$

$$MEM = \text{memory use rate} / \text{computer capability};$$

$$STRG = \text{use rate of storage apparatus} / \text{computer capability};$$

and

$$LOAD = SPEC * MEM * STRG.$$

As to the CPU use rate for 1 minute, the CPU use rate for 15 minutes, the memory use rate, and the user rate of the storage apparatus, the latest use values are employed. A computer capability of a server is equal to a relative capability with respect to the servers 51, 52, and 53. The SPECINT 92 which has been publicly disclosed as the value indicative of the general capability is used as this computer capability. The larger this value becomes, the higher the computer capability is increased.

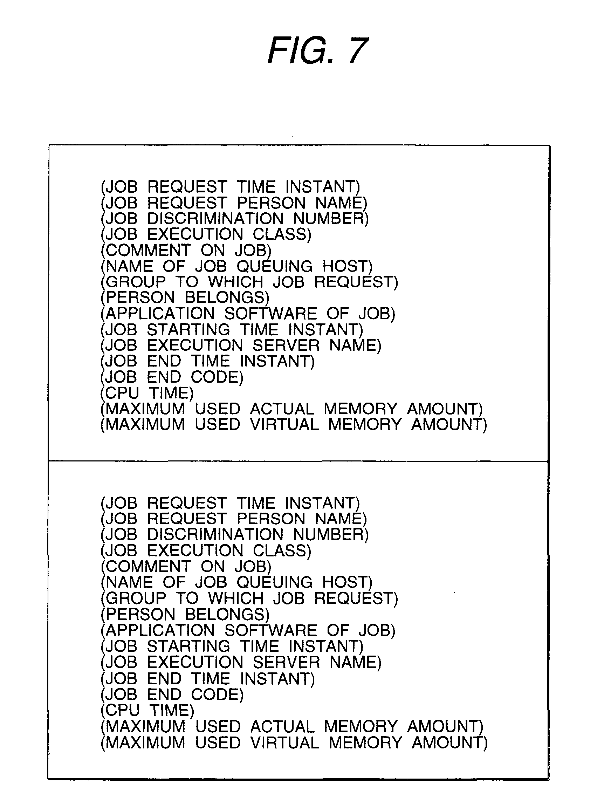

Subsequently, both an actual memory capacity and a virtual memory capacity, which are scheduled to be used by this execution-subject job, are added to the actual memory capacity Rf and the virtual memory capacity Rv of the execution server (step S25). Next, the input file of this execution-subject job is transferred to such a server to which the job execution is allocated, and then, the execution of this job is commenced (step S26). After the job execution is ended, the added value at the step S25 is subtracted from the server resource management table (step S27). Next, the execution history of the job is saved (step S28). This job execution history is defined as a job enter time instant, a user name, a job number, CPU use time, and the like, which are equal to the information related to the job execution. Fig. 7 is a diagram for representing one set of information used to save the job execution history, and also one record format.

As previously described, in accordance with this embodiment mode 1, the job is designated which is resembled to the execution-subject job which is presently executed based upon the execution history of the job which was executed in the past by the job request person. As a consequence, it is possible to previously predict the server resource amounts which are used by the respective jobs. Also, the jobs can be accomplished under normal condition without the occurrence of such a problem, namely a lack of the server resources occurs with respect to the respective servers.

(Embodiment Mode 2)

An embodiment mode 2 of the present invention will now be explained with reference to drawings. Fig. 1 and Fig. 2 show a distributed processing system related to a charge processing operation, according to an embodiment mode 2 of the present invention. This distributed processing system is equipped with a function capable of forming charge totalizing information from the job execution history saved at the step S28 of Fig. 3 while using a specific server capability as a base, and also a function capable of executing a charge processing operation to a user of a computer.

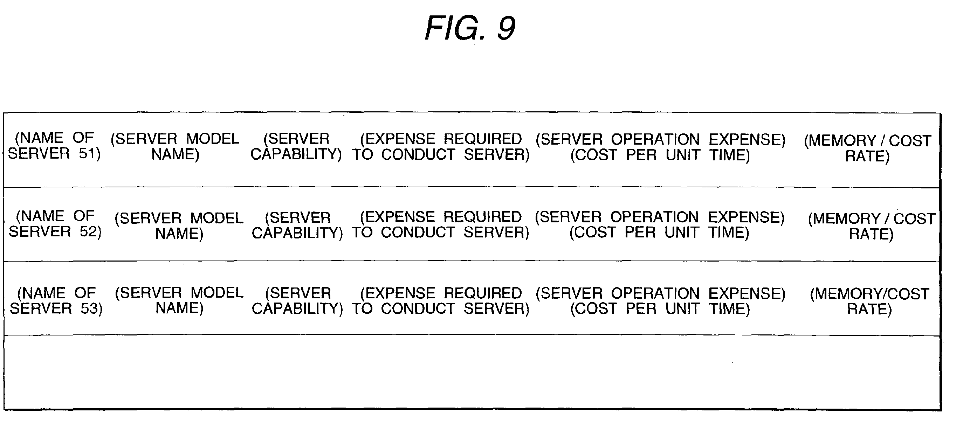

In the distributed processing system with employment of the above-explained arrangement, operations thereof will now be explained with reference to a flow chart of Fig. 8. First, both the data of the format shown in Fig. 7 and data of such a format shown in Fig. 9 are firstly read, and then, charge information is normalized while using a specific server as a reference (step 330). The data of the format shown in Fig. 7 corresponds to the saved information of the job execution history. In the data of the format indicated in Fig. 9, a name of a server, and a value of a CPU capability, for example, a value of SPECINT 92 are described. In this case, the charge information is normalized (step S30), assuming now that a capability of a reference server is "K", a server capability to be normalized is "Pb", and a server capability which has been normalized is Pb/K.

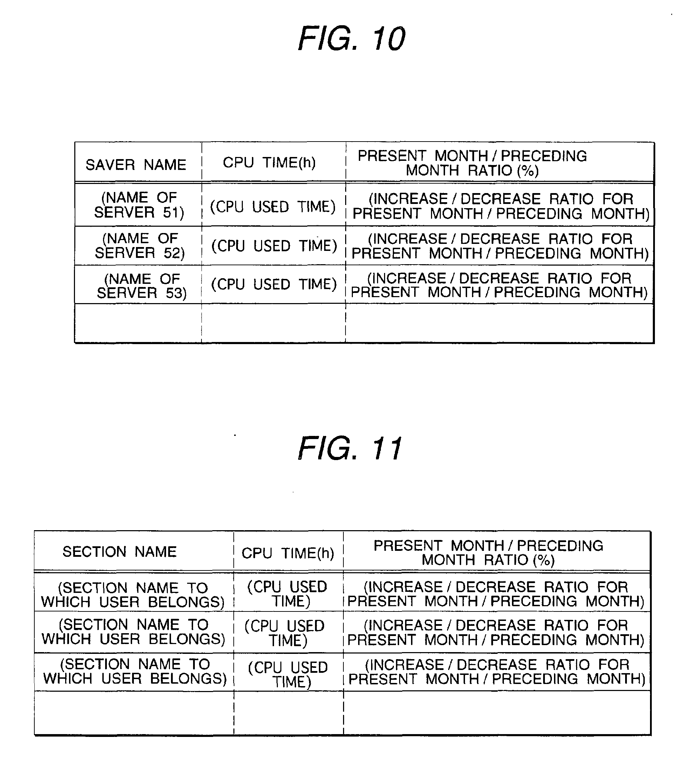

Next, with respect to the normalized charge information, an output format is designated to output a report (step S31). For instance, the output format corresponds to a server-depending CPU actual use time report (see Fig. 10), a section-depending server actual use time report (see Fig. 11) .

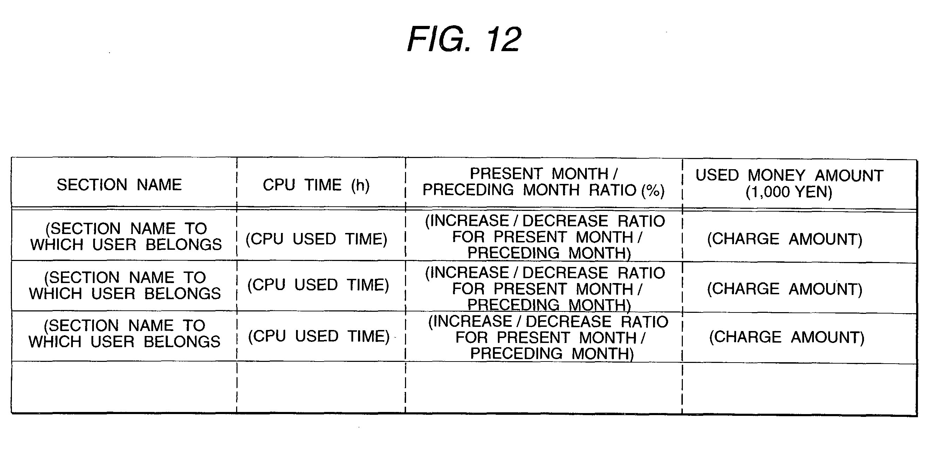

Next, as to data of the section-depending actual use time report which is calculated by the output format, an expense charging report (see Fig. 12) is formed. This expense charging report includes a server basic use charge (namely, expense required when server is conducted), a server operation expense (namely, unit cost per time), and a server use money amount. The server basic use charge is calculated based upon both use time of each of these servers and an expense required when a server is conducted as described in Fig. 9. The server operation expense is calculated based upon an expense originated from operation of a server. The server use money amount is calculated by using a memory cost ratio. This memory cost ratio is calculated based on a ratio of memory cost to a server purchase price. The server use money amount may be calculated based upon the below-mentioned formula:

$$CCOST = \text{server operation expense} * (1 - \text{memory cost ratio});$$

$$MCOST = \text{server operation expense} * \text{memory cost ratio};$$

and

$$\text{server use money amount} = \text{server basic use charge} + CCOST + MCOST.$$

As previously explained, in accordance with this embodiment mode, the actual use data are totalized which are normalized from the job execution history, while the capability of the specific server is used as the reference. As a result, fair expenses can be charged to the server users, and at the same time, the totalized actual use data can be utilized as the judging base when the server capabilities are increased.

As previously explained, in accordance with the present invention, the computer resource amounts which are used by the respective jobs can be predicted in advance by specifying the job which was executed in the past and is resembled to the execution-subject job from the history of the jobs which were executed in the past by the job request person. As a result, while a lack of resources never occurs with respect to each of the computers, the job can be executed by the optimum computers.

Furthermore, according to the present invention, the actual use data are totalized which are normalized from the job execution history, while the capability of the specific computer is used as the reference. As a result, fair expenses can be charged to the computer users, and at the same time, the totalized actual use data can be utilized as the judging base when the computer capabilities are increased.

**Claims**

1. A job distributed processing method in that a plurality of computers having the respective preselected resource amounts are connected through a network to each other, and an entered job to any of said plural computers are distributed so as to execute the entered job, said job distribution processing method comprising the steps of:

   storing a job execution history as to a plurality of jobs which were executed in the past in each of said computers;
   referring to said job execution history to select a computer such that when an execution-subject job is executed, said execution-subject job does not exceed the resource amount stored by said computer; and
   distributing said execution-subject job to said selected computer.

2. A job distributed processing method as claimed in claim 1 further comprising the steps of:

   predicting a resource amount required when said execution-subject job is executed, by selecting a job from said job execution history, and said job is resembled to said execution-subject job and was executed in the past; and
   managing both a total resource amount possessed by each of said plural computers and also used resource amounts used by the respective computers in the format of a server resource management table;
   executing a job selecting method to select a computer such that a summed resource amount does not exceed the total resource amount of said computer, and further, a load thereof becomes minimum, said summed resource amount being calculated between the predicted resource amount of the execution-subject job and the used resource amount obtained with reference to said server resource management table; and
   distributing said job to said selected computer.

3. A job distributed processing method as claimed in claim 2 wherein said job selecting method selects the job which was executed in the past and is resembled to said execution-subject job, while referring to the respective items of a comment in which a name of a job, a name of a job execution request person, a job execution request day, and a feature of a job are described.

4. A job distributed processing method as claimed in claim 1, wherein when there is no job which was executed in the past and is resembled to said execution-subject job, a selection is made of such a computer that a ratio of the used resource amount with respect to the total resource amount saved by said computer becomes minimum, and also a load thereof becomes minimum, and the entered job is distributed to said selected computer.

5. A job distributed processing method as claimed in claim 1 wherein capabilities of the respective computers are normalized while a capability of a specific computer is used as a reference;

   actual use data normalized from said job execution history is totalized/processed based upon the normalized computer capability; and
   a charging process operation is carried out with respect to each of users of the respective computers based on said actual use data.

6. A job distributed processing method as claimed in claim 5 wherein the charging process operation is carried out with respect to the user of each of the respective computers based upon a total expense required when each of said computers is conducted, a total expense required when each of said computers is operated, CPU time used by each of said jobs, and an actual memory amount used by each of said jobs.

7. A recording medium which stores a program capable of executing both said totalizing process operation of the actual use data and said charging process operation with respect to the user as recited in claim 5.

8. A recording medium as claimed in claim 7, which further stores a program capable of executing said charging process operation as recited in claim 6.

9. A distributed processing system comprising a job queuing server which mutually connects a plurality of computers having preselected resource amounts to each other via a network, and also distributes an entered job to any of said plural computers so as to execute the entered job by the job-distributed computer, wherein:

   said job queuing server saves a job execution history as to a plurality of jobs which were executed in the past;

and

while referring to said job execution history, said job queuing server selects such a computer that when an execution-subject job is executed, said execution-subject job does not exceed the resource amount saved by said computer, and said job queuing server distributes said execution-subject job to said selected computer.

10. A distributed processing system as claimed in claim 9, wherein said job queuing server comprise:

history saving means for saving thereinto the respective job execution histories of said plurality of jobs which were executed in the past;

history referring means operated in such a manner that while a job selection method is executed by which a job is selected from said job execution history, and said job is resembled to said execution-subject job and was executed in the past, a resource amount required when said execution-subject job is executed in predicted;

resource managing means operated in such a manner that while both a total resource amount saved by each of said plural computers and also used resource amounts used by the respective computers are managed in the format of a server resource management table, a list is made of such a computer that a summed resource amount does not exceed the total resource amount saved by said computer, and further, a load thereof becomes minimum, said summed resource amount being calculated between the predicted resource amount of the execution-subject job and the used resource amount obtained with reference to said server resource management table; and

distributing means for selecting such a computer whose load becomes minimum from said list and for distributing the entered job to the selected computer.

11. A distributed processing system as claimed in claim 10, wherein said job selecting method selects the job which was executed in the past and is resembled to said execution-subject job, while referring to the respective items of a comment in which a name of a job, a name of a job execution request person, a job execution request day, and a feature of a job are described.

12. A distributed processing system as claimed in claim 9, wherein when there is no job which was executed in the past and is resembled to said execution-subject job, said job distributing means selects such a computer that a ratio of the used resource amount with respect to the total resource amount saved by said computer becomes minimum, and also a load thereof becomes minimum, and also distributes the entered job to said selected computer.

13. A distributed processing system as claimed in claim 9, further comprising:
charge processing means operated in such a manner that capabilities of the respective computers are normalized while a capability of a specific computer is used as a reference; actual use data normalized from said job execution history is totalized/processed based upon the normalized computer capability; and a charging process operation is carried out with respect to each of users of the respective computers based on said actual use data.

14. A distributed processing system as claimed in claim 13, wherein said charge processing means further executes such a charging process operation with respect to the user of each of the respective computers based upon a total expense required when each of said computers is conducted, a total expense required when each of said computers is operated, CPU time used by each of said jobs, and an actual memory amount used by each of said jobs.

# FIG. 1

```
    2              3                6
 ┌─────────┐  ┌───────────┐  ┌───────────┐              53
 │ CLIENT  │  │JOB QUEUING│  │  CHARGE   │         ┌──────────┐
 │         │  │  SERVER   │  │ TOTALIZING│         │  SERVER  │
 └─────────┘  └───────────┘  │  SERVER   │         └──────────┘
                             └───────────┘              12
                                        11
       ┌────────────┐     ┌──────────────┐      ┌────────────┐
       │ LOCAL AREA │ 10  │  WIDE  AREA  │      │ LOCAL AREA │
       │  NETWORK   │─────│   NETWORK    │──────│  NETWORK   │
       │   (LAN)    │     │    (WAN)     │      │   (LAN)    │
       └────────────┘     └──────────────┘      └────────────┘
          41      51                                  52
      ┌────────┐ ┌────────┐                      ┌──────────┐
      │  FILE  │ │ SERVER │                      │  SERVER  │
      │ SERVER │ │        │                      └──────────┘
      └────────┘ └────────┘
       ┌──────┐
       │ INPUT│
       │ FILE │
       └──────┘
```

# FIG. 2

JOB QUEUING SERVER        3

```
         104                      101
┌──────────────────┐   ┌──────────────────┐        (JOB HISTRY
│   JOB HISTORY    │   │   JOB HISTORY    │◄──────► REFERRING
│ SAVING FUNCTION  │◄─►│    REFERRING     │         REQUEST)
│                  │   │    FUNCTION      │
└──────────────────┘   └──────────────────┘             │
         103                      102                    ▼
┌──────────────────┐   ┌──────────────────┐        (JOB EXECUTION
│ JOB DISTRIBUTING │   │ SERVER RESOURCE  │◄────── REQUEST)
│    FUNCTION      │◄─►│    MANAGING      │
│                  │   │    FUNCTION      │
└──────────────────┘   └──────────────────┘
```

(EXECUTE JOB BY SERVER)

# FIG. 3

```
                    ( START )
                        |
                        v
S21        /RETRIEVE\
          / RESEMBLING JOB \  NO: NUMBER
         /  FROM PAST JOB   \    "0"
         \  HISTORY AND     /------------+
          \ DESIGNATE JOB  /             |
           \DISCRIMINATION/              |
            \  NUMBER?  /                |
                |                        |
        YES: DESIGNATE                   |
            NUMBER                       |
S22         v                            |
    +-------------------+                |
    | DESIGNATE RESEMBLING |<------------+
    | JOB WHEN JOB EXECUTION |
    |    IS REQUESTED    |
    +-------------------+
            |
S23         v
    +-------------------+
    | FROM LIST OF COMPUTERS |
    | CAPABLE OF EXECUTING JOB |
    +-------------------+
            |
S24         v
    +-------------------+
    | SELECT OPTIMUM COMPUTER |
    | CAPABLE OF EXECTING JOB |
    | FROM COMPUTER LIST |
    +-------------------+
            |
S25         v
    +-------------------+
    |REGISTER RESOURCE AMOUNT|
    | USED BY COMPUTER   |
    | WHERE JOB IS EXECUTED |
    +-------------------+
```

S26
EXECUTE JOB ON SERVER

S27
DELETE RESOURCE AMOUNT REGISTERED AT STEP S25 AFTER JOB IS ENDED

S28
SAVE JOB EXECUTION HISTORY

( END )

# FIG. 4

| (JOB DISCRIMINATION NUMBER) | (JOB NAME) | (JOB REQUEST PERSON) | (JOB REQUEST DAY) | (COMMENT ON JOB FEATURE) |
|---|---|---|---|---|
| (JOB DISCRIMINATION NUMBER) | (JOB NAME) | (JOB REQUEST PERSON) | (JOB REQUEST DAY) | (COMMENT ON JOB FEATURE) |
| | | | | |

# *FIG. 5*

(JOB  DISCRIMINATION  NUMBER)

(JOB  NAME)

(INPUT  FILE  NAME )

(USER  NAME)  ETC.

# FIG. 6

| (NAME OF SERVER 51) | (MOUNTED ACTUAL MEMORY AMOUNT) | (MOUNTED VIRTUAL MEMORY AMOUNT) | (ACTUAL MEMORY AMOUNT TO BE USED) | (VIRTUAL MOMORY AMOUNT TO BE USED) |
|---|---|---|---|---|
| (NAME OF SERVER 52) | (MOUNTED ACTUAL MEMORY AMOUNT) | (MOUNTED VIRTUAL MEMORY AMOUNT) | (ACTUAL MEMORY AMOUNT TO BE USED) | (VIRTUAL MOMORY AMOUNT TO BE USED) |
| (NAME OF SERVER 53) | (MOUNTED ACTUAL MEMORY AMOUNT) | (MOUNTED VIRTUAL MEMORY AMOUNT) | (ACTUAL MEMORY AMOUNT TO BE USED) | (VIRTUAL MOMORY AMOUNT TO BE USED) |
|  |  |  |  |  |

EP 1 170 663 A2

# FIG. 7

(JOB REQUEST TIME INSTANT)
(JOB REQUEST PERSON NAME)
(JOB DISCRIMINATION NUMBER)
(JOB EXECUTION CLASS)
(COMMENT ON JOB)
(NAME OF JOB QUEUING HOST)
(GROUP TO WHICH JOB REQUEST)
(PERSON BELONGS)
(APPLICATION SOFTWARE OF JOB)
(JOB STARTING TIME INSTANT)
(JOB EXECUTION SERVER NAME)
(JOB END TIME INSTANT)
(JOB END CODE)
(CPU TIME)
(MAXIMUM USED ACTUAL MEMORY AMOUNT)
(MAXIMUM USED VIRTUAL MEMORY AMOUNT)

(JOB REQUEST TIME INSTANT)
(JOB REQUEST PERSON NAME)
(JOB DISCRIMINATION NUMBER)
(JOB EXECUTION CLASS)
(COMMENT ON JOB)
(NAME OF JOB QUEUING HOST)
(GROUP TO WHICH JOB REQUEST)
(PERSON BELONGS)
(APPLICATION SOFTWARE OF JOB)
(JOB STARTING TIME INSTANT)
(JOB EXECUTION SERVER NAME)
(JOB END TIME INSTANT)
(JOB END CODE)
(CPU TIME)
(MAXIMUM USED ACTUAL MEMORY AMOUNT)
(MAXIMUM USED VIRTUAL MEMORY AMOUNT)

# FIG. 8

```
┌──────────────────────┐        ┌──────────────────────┐
│  JOB EXECUTION       /        │     SERVER           /
│  HISTORY            /         │   ATTRIBUTE         /
│  SAVE DATA         /          │    TABLE           /
│  (FIG.7)          /           │   (FIG.9)         /
└──────────────────┘           └──────────────────┘
```

S30

┌─────────────────────────────────────┐
│  NORMALIZE CHARGE INFORMATION        │
│      BY SPECIFIC SERVER              │
└─────────────────────────────────────┘

S31

┌─────────────────────────────────────┐
│  DISIGNATE CHARGE INFORMATION        │
│  OUTPUT FORMAT AND THEREAFTER        │
│    OUTPUT CHARGE INFORMATION         │
└─────────────────────────────────────┘

S32

┌─────────────────────────────────────┐
│  EXECUTE PROCESS FOR ISSUING         │
│  CHARGE DEBIT NOTE TO SERVER         │
│         USE SECTION                  │
└─────────────────────────────────────┘

( END )

# FIG. 9

| (NAME OF SERVER 51) | (SERVER MODEL NAME) | (SERVER CAPABILITY) | (EXPENSE REQUIRED TO CONDUCT SERVER) | (SERVER OPERATION EXPENSE) (COST PER UNIT TIME) | (MEMORY / COST RATE) |
|---|---|---|---|---|---|
| (NAME OF SERVER 52) | (SERVER MODEL NAME) | (SERVER CAPABILITY) | (EXPENSE REQUIRED TO CONDUCT SERVER) | (SERVER OPERATION EXPENSE) (COST PER UNIT TIME) | (MEMORY / COST RATE) |
| (NAME OF SERVER 53) | (SERVER MODEL NAME) | (SERVER CAPABILITY) | (EXPENSE REQUIRED TO CONDUCT SERVER) | (SERVER OPERATION EXPENSE) (COST PER UNIT TIME) | (MEMORY/COST RATE) |
|  |  |  |  |  |  |

# FIG. 10

| SAVER NAME | CPU TIME(h) | PRESENT MONTH / PRECEDING MONTH RATIO (%) |
|---|---|---|
| (NAME OF SERVER 51) | (CPU USED TIME) | (INCREASE / DECREASE RATIO FOR PRESENT MONTH / PRECEDING MONTH) |
| (NAME OF SERVER 52) | (CPU USED TIME) | (INCREASE / DECREASE RATIO FOR PRESENT MONTH / PRECEDING MONTH) |
| (NAME OF SERVER 53) | (CPU USED TIME) | (INCREASE / DECREASE RATIO FOR PRESENT MONTH / PRECEDING MONTH) |
| | | |

# FIG. 11

| SECTION NAME | CPU TIME(h) | PRESENT MONTH / PRECEDING MONTH RATIO (%) |
|---|---|---|
| (SECTION NAME TO WHICH USER BELONGS) | (CPU USED TIME) | (INCREASE / DECREASE RATIO FOR PRESENT MONTH / PRECEDING MONTH) |
| (SECTION NAME TO WHICH USER BELONGS) | (CPU USED TIME) | (INCREASE / DECREASE RATIO FOR PRESENT MONTH / PRECEDING MONTH) |
| (SECTION NAME TO WHICH USER BELONGS) | (CPU USED TIME) | (INCREASE / DECREASE RATIO FOR PRESENT MONTH / PRECEDING MONTH) |
| | | |

# FIG. 12

| SECTION NAME | CPU TIME (h) | PRESENT MONTH / PRECEDING MONTH RATIO (%) | USED MONEY AMOUNT (1,000 YEN) |
|---|---|---|---|
| (SECTION NAME TO WHICH USER BELONGS | (CPU USED TIME) | (INCREASE / DECREASE RATIO FOR PRESENT MONTH / PRECEDING MONTH) | (CHARGE AMOUNT) |
| (SECTION NAME TO WHICH USER BELONGS | (CPU USED TIME) | (INCREASE / DECREASE RATIO FOR PRESENT MONTH / PRECEDING MONTH) | (CHARGE AMOUNT) |
| (SECTION NAME TO WHICH USER BELONGS | (CPU USED TIME) | (INCREASE / DECREASE RATIO FOR PRESENT MONTH / PRECEDING MONTH) | (CHARGE AMOUNT) |
|  |  |  |  |

EP 1 170 663 A2